# EUROPÄISCHE PATENTSCHRIFT

(11) **EP 0 883 519 B1**
(45) Veröffentlichungstag und Bekanntmachung des Hinweises auf die Patenterteilung: **22.08.2001**
(21) Anmeldenummer: 97900591.5
(22) Anmeldetag: 10.01.1997
(51) Int. Cl.: B60R 9/06

(54) **TRAGVORRICHTUNG FÜR EINEN HECKSEITIGEN ANBAU AN KRAFTFAHRZEUGEN**
SUPPORT DEVICE FOR REAR END ASSEMBLY OF VEHICLES
DISPOSITIF DE SUPPORT A PLACER A L'ARRIERE D'UN VEHICULE AUTOMOBILE

(30) Priorität: 12.01.1996 DE 29600485 U
(43) Veröffentlichungstag der Anmeldung: 16.12.1998
(73) Patentinhaber: SMV-Metall Gmbh, 49163 Bohmte (DE)
(72) Erfinder: LAUMANN, Wilfried, D-49163 Bohmte (DE)
(74) Vertreter: Busse & Busse Patentanwälte
(86) Internationale Anmeldenummer: EP9700099
(87) Internationale Veröffentlichungsnummer: WO9725221

(56) Entgegenhaltungen:
- DE-A- 4 340 009
- DE-C- 4 213 216
- FR-A- 847 797
- FR-A- 2 588 810
- FR-A- 2 593 128
- GB-A- 247 380
- US-A- 3 251 520
- US-A- 4 951 991

## Beschreibung

Die Erfindung bezieht sich auf eine Tragvorrichtung für einen heckseitigen Anbau an Kraftfahrzeugen, insbesondere an einem Wohnmobil, Wohnwagen o. dgl., nach dem Oberbegriff des Anspruchs 1.

Bei einer bekannten Tragvorrichtung dieser Art (DE-GM 91 09 357.0) ist ein vom Fahrzeugheck vorstehendes Transportgestell über zwei parallel zur Fahrzeuglängsachse verlaufende und in fahrgestellseitige Rahmenteile des Fahrzeugs eingreifende Stützstreben in Gebrauchsstellung gehalten, wobei diese Stützstreben dem Transportgestell eine einen konstanten Heckabstand aufweisende Einbaulage vermitteln. Die Stützstreben verbleiben auch bei Nichtgebrauch des Transportgestells in dieser Einbaulage und erfordern zur Freigabe des Heckbereiches eine vollständige Demontage, so daß eine derartige Tragvorrichtung bei insgesamt hohem Raumbedarf einen nachteilig eingeschränkten Bedienkomfort aufweist.

Der Erfindung liegt die Aufgabe zugrunde, eine Tragvorrichtung für einen heckseitigen Anbau an Kraftfahrzeugen zu schaffen, deren Bauteile mit geringem technischem Aufwand die Aufnahme unterschiedlicher Transportgüter auf einer weitgehend variablen Beladefläche ermöglichen, mit geringem Verstellaufwand in einer raumsparenden Ruhestellung positionierbar und in dieser am Fahrzeugheck mitführbar sind.

Die Erfindung löst diese Aufgabe durch eine Tragvorrichtung mit den Merkmalen des Anspruchs 1. Hinsichtlich wesentlicher weiterer Ausgestaltungsmerkmale wird auf die Ansprüche 2 bis 19 verwiesen.

Die Erfindung schafft eine Tragvorrichtung, deren mit einer Führungs- und Halteprofilierung versehene Schubschienen eine Basisbaueinheit bilden, die im heckseitigen Bereich des Fahrzeuggestells in unterschiedliche Belade-flächen definierende Stützstellungen verbringbar ist. An diesen Schubschienen können unterschiedliche Transportgüter, beispielsweise Fahrräder, Zweiradfahrzeuge o. dgl., über direkte Auflagepunkte bildende Stützglieder aufgenommen und über das Transportgestell zusätzlich gehaltert werden. Die Tragvorrichtung weist dabei über die Führungs- und Halteprofilierung der Schubschienen variable Verstellmöglichkeiten für die Stützglieder auf, so daß mit geringem Verstellaufwand eine Veränderung der Beladefläche und/oder der Befestigungsmöglichkeiten für das Transportgut erreicht ist.

Aus der dem Heckbereich des Fahrzeugs vorgelagerten Transportstellung können sämtliche Bauteile der Tragvorrichtung über entsprechende Schwenk-, Klapp- und/oder Steckverbindungen so bewegt werden, so daß die Tragvorrichtung im bodeneitigen Nahbereich des Fahrgestellrahmens in einer kompakten Packstellung positioniert werden kann und damit eine permanente Mitführung der Tragvorrichtung am Heckbereich des Fahrzeugs, beispielsweise an einem Wohnmobil o. dgl., mit geringem Raumbedarf und ohne Beeinflussung des Komforts möglich ist.

Hinsichtlich weiterer Vorteile und Einzelheiten der Erfindung wird auf die nachfolgende Beschreibung und die Zeichnung verwiesen, in der mehrere Ausführungsbeispiele des Gegenstands der Erfindung schematisch näher veranschaulicht sind. In der Zeichnung zeigen:
- Fig. 1: eine perspektivische Einzeldarstellung einer erfindungsgemäßen Tragvorrichtung mit einem Transportgestell und zusätzlichen Transportgut-Stützgliedern auf zwei parallelen Schubschienen,
- Fig. 2: eine Explosivdarstellung ähnlich Fig. 1 mit veränderten Transportgut- Stützgliedern und jeweiligen Hohlprofilen im Bereich des Fahrgestells zur Aufnahme der Schubschienen,
- Fig. 3: eine Einzeldarstellung der Tragvorrichtung im Bereich einer der im Hohlprofil des Fahrgestells abgestützten Schubschienen,
- Fig. 4: eine vergrößerte Einzeldarstellung eines der Transportgut-Stützglieder mit lösbaren Verbindungsteilen zur Schubschiene,
- Fig. 5: eine Querschnittsdarstellung der aus zwei Hohlprofilteilen bestehenden Schubschiene,
- Fig. 6: eine vergrößerte Ausschnittsdarstellung der Schubschiene im Verbindungsbereich mit einem Transportgut-Stützglied in Gebrauchsstellung,
- Fig. 7: eine Prinzipdarstellung der Tragvorrichtung in einer zweiten Ausführungsform,
- Fig. 8: eine Einzeldarstellung des Fahrgestell-Hohlprofils in einer zweiten Ausführungsform,
- Fig. 9: eine Perspektivdarstellung der Tragvorrichtung mit einer Anhängekupplung,
- Fig. 10: eine perspektivische Ausschnittsdarstellung der Tragvorrichtung mit einer Stoßstange,
- Fig. 11: eine perspektivische Ausschnittsdarstellung der Tragvorrichtung mit einer Schublade als Anbauteil,
- Fig. 12: eine Perspektivdarstellung ähnlich Fig. 11 mit Aussteifungssteben im Bereich der Schublade,
- Fig. 13 bis Fig. 15: jeweilige Einzeldarstellungen eines der Fahrgestellteile mit in diese einführbaren Schubschienen, und
- Fig. 16: eine perspektivische Heckansicht eines Wohnmobils mit einer Faltbox als Anbauteil.

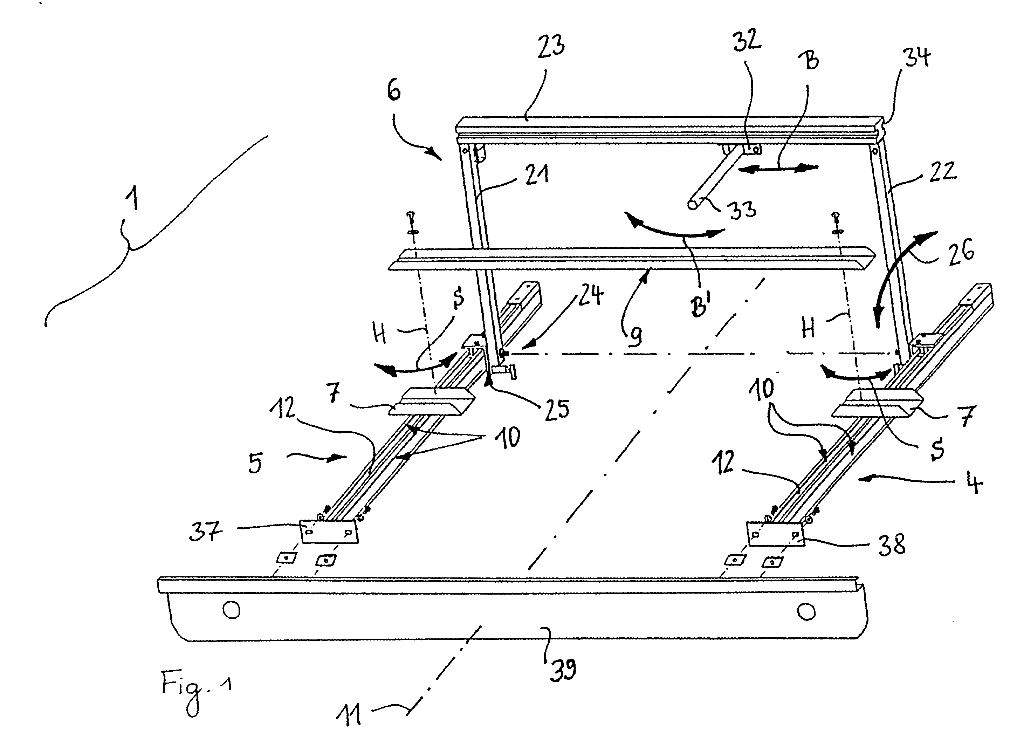

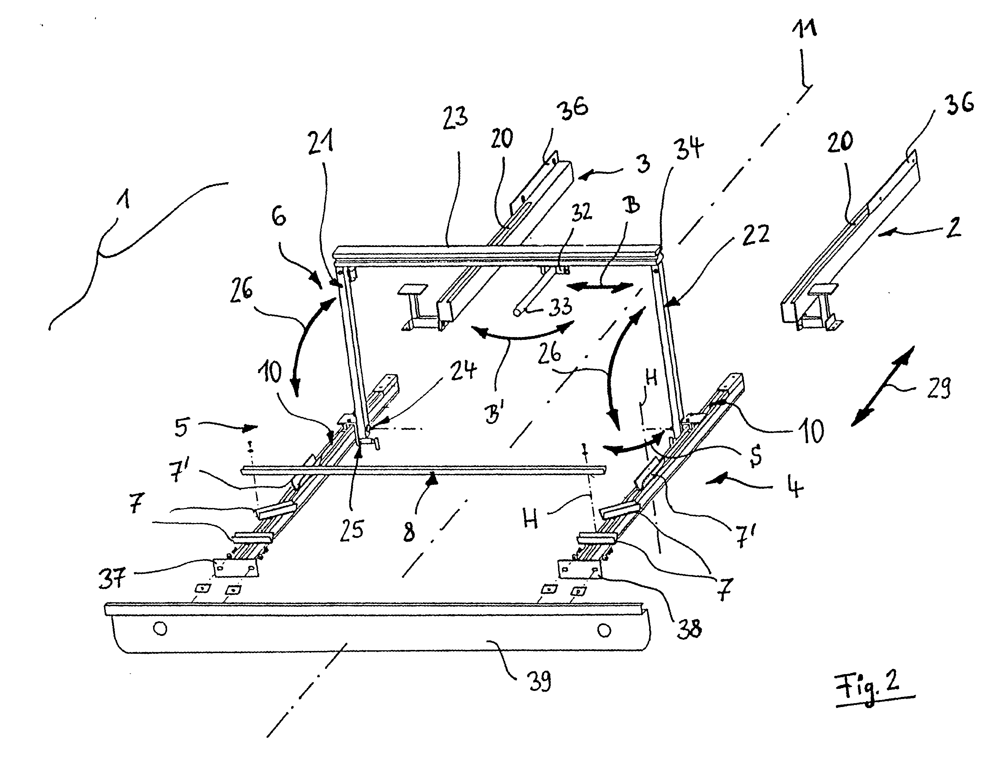

In Fig. 1 ist eine insgesamt mit 1 bezeichnete Tragvorrichtung für einen heckseitigen Anbau an ein Kraftfahrzeug (nicht dargestellt) veranschaulicht, die mit zwei jeweilige Verbindungsglieder zu Fahrgestellteilen 2, 3 (Fig. 2) des Fahrzeugrahmens bildenden Schubschienen 4,5 versehen ist, die ihrerseits in der dargestellten Montagestellung mit einem Transportgestell 6 zu der Tragvorrichtung 1 komplettiert sind.

Die Tragvorrichtung 1 weist in erfindungsgemäßer Ausbildung Schubschienen 4, 5 auf, die beispielsweise als einstückige Strangprofil-Bauteile mit einer Führungs- und Halteprofilierung 10 ausgebildet sind. Über diese Profilierung 10 sind einerseits das Transportgestell 6 und zusätzliche Stützglieder 7,8 als schwenk-, klapp- und/oder steckbare Anbauteile in der Gebrauchsstellung festlegbar und andererseits können die Schubschienen 4, 5 in unterschiedlichen Auszug-Stellungen an den Fahrgestellteilen 2, 3 abgestützt werden.

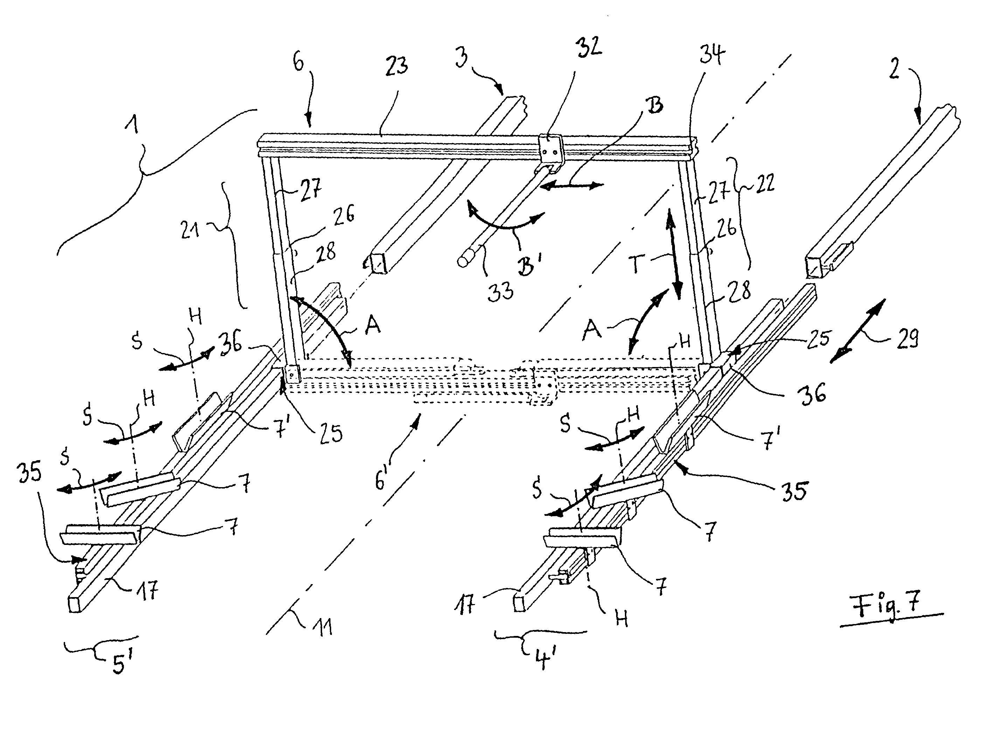

In Gebrauchsstellung der Tragvorrichtung 1 (Fig. 1) sind sowohl die Schubschienen 4, 5 als auch das Transportgestell 6 und die Stützglieder 8, 9 als jeweilige Anbauteile über einen, in der Explosivdarstellung verdeutlichten, lösbaren Verbindungseingriff festgelegt und aus dieser dem Heckbereich des Fahrzeugs vorgelagerten Gebrauchsstellung können sämtliche Bauteile nach Art eines Falt-Gepäckträgers so geschwenkt, geklappt und/oder gesteckt werden, daß die Tragvorrichtung 1 in eine kompakte Packstellung nahe dem stirnseitigen Ende des Fahrgestells verbracht werden kann (teilweise dargestellt durch Strichlinien in Fig. 7) und so der Heckbereich des Fahrzeugs ungehindert zugänglich ist. Denkbar ist dabei die Ausbildung der Bauteile aus Leichtmetall, so daß das Leergewicht vorteilhaft gering ist. In den gemäß Fig. 1, Fig. 2 und Fig. 7 dargestellten Ausführungsformen der Tragvorrichtung 1 ist diese mit jeweils zwei die Anbauteile aufnehmenden Schubschienen 3, 4 ausgeführt, wobei ebenso denkbar ist, die Tragvorrichtung mit einer einzelnen Schubschiene auszubilden (nicht dargestellt).

Die beiden Schubschienen 4, 5 sind als im wesentlichen gleiche, eine Basisbaueinheit der Tragvorrichtung 1 bildende Bauteile vorgesehen und in der dargestellten Montagestellung sind die beiden Schubschienen 3,4 zu einer die Fahrzeuglängsachse definierenden Mittellängsebene 11 symmetrisch angeordnet, so daß sich die nachfolgende Beschreibung der Tragvorrichtung 1 im wesentlichen auf eine Seite der Schubschienen-Paarung 4, 5 beschränken kann und gleiche Bauteile mit entsprechenden Bezugszeichen versehen sind.

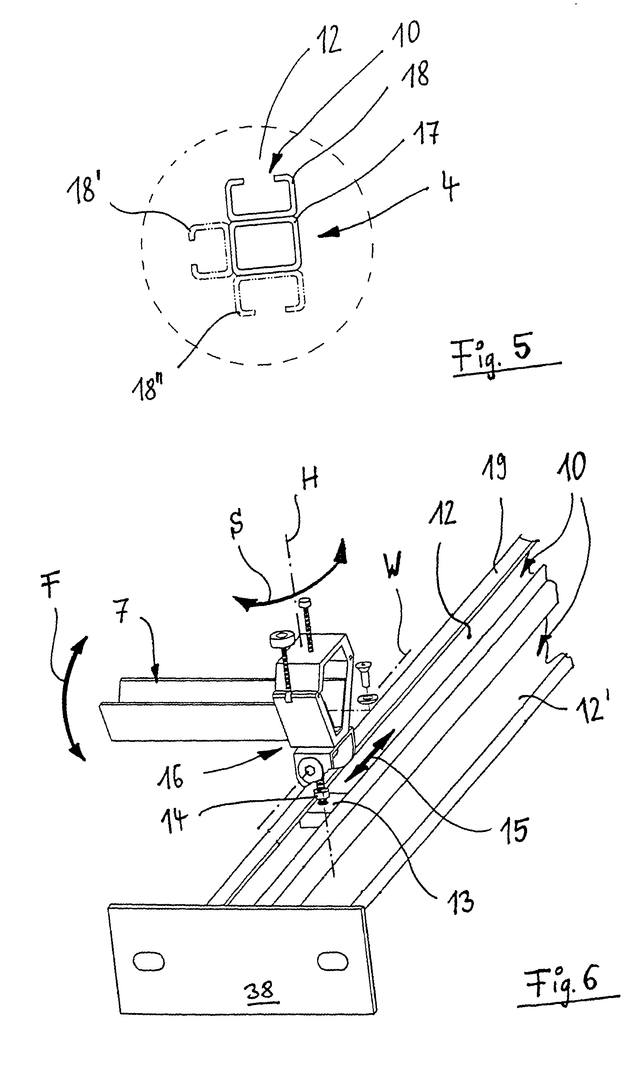

Die vergrößerte Ausschnittsdarstellung der Schubschiene 4 gemäß Fig. 6 verdeutlicht, daß diese mit einer die Halteprofilierung 10 bildenden und sowohl das Transportgestell 6 (Fig. 1) als auch die Stützglieder 7,8 festlegenden Längsnut 12 versehen ist, wobei in zweckmäßiger Ausführung in der Längsnut 12 ein Klemmkörper 13 vorgesehen ist, über dessen Schraubverbindungsteil 14 die Anbauteile 6 bzw. 7, 8 über ein Verbindungsteil 16 gehaltert sind (Fig. 4, Fig. 6).

Die vergrößerten Explosivdarstellungen gemäß Fig. 4 bzw. Fig. 6 verdeutlichen dabei, daß nach einem Lösen bzw. einer Lockerung des jeweiligen Schraubverbindungsteiles 14 das zugeordnete Anbauteil 6 bzw. 7, 8 in der Längsnut 12 verschoben werden kann (Pfeil 15 in Fig. 6), so daß die Tragvorrichtung 1 damit an unterschiedliche Transportgüter (nicht dargestellt) anpaßbare Gebrauchsstellungen im Bereich der Anbauteile 6, 7 darbietet. Außerdem können die Stützglieder 7 um ihre vertikale Halteachse H so um 180° geschwenkt (Pfeil S) werden, daß eine Parallelstellung der Schubschiene 4, 5 und des Stützgliedes 7' erreicht ist (Fig. 1, Fig. 7) bzw. zur Aufnahme des Stützgliedes 8 die Glieder 7 in Gegenüberstellung verlaufen. Bei einer Ausbildung des Verbindungsteiles 16 als ein Kipphalter mit einer Schwenkachse W (Fig. 6) kann das Stützglied 7 noch zusätzlich in dieser Achse in Richtung F verschwenkt werden.

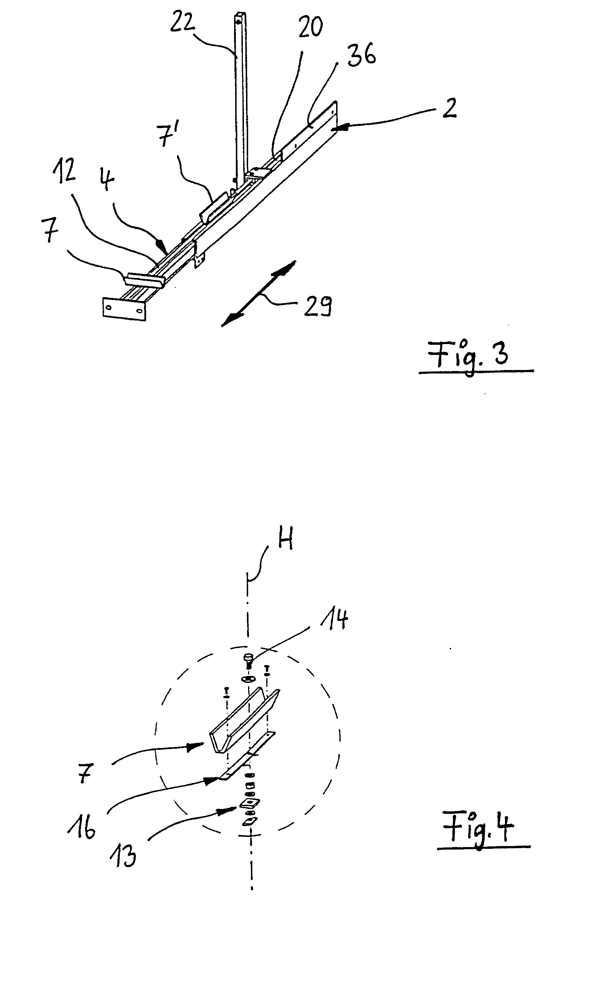

In der Darstellung gemäß Fig. 5 ist die Schubschiene 4 in einer Stirnansicht veranschaulicht, wobei deren im wesentlichen rechteckige Querschnittskontur als die in die Hohlprofile der Fahrgestellteile 2, 3 einführbare Führungsprofilierung deutlich wird. Die Schubschiene 4 ist in dieser Ausführungsform als ein Vierkantrohrteil 17 ausgebildet, das mit einem die Längsnut 12 aufweisenden Profilansatzteil 18 versehen ist. Dieses Teil 18 kann in unterschiedlichen (mit Strich-Punkt-Linien dargestellten) Verbindungsstellungen am Teil 17 so festgelegt sein, daß die Schubschiene 4 unterschiedliche Halteprofilbereiche für die Stützglieder 7 bzw. das Traggestell 6 darbietet. Ebenso ist denkbar, mehrere der Profilansatzteile 18, 18', 18'' gleichzeitig an einem Vierkantrohrteil 17 anzuordnen und den bei der Schubbewegung (Pfeil 29, Fig. 3) jeweils reibbelasteten Bereich der Schubschienen 4, 5 mit einem abriebfesten Aufsatzteil, beispielsweise einer Kunststoffschiene, zu versehen, so daß eine einfache Bedienung der Vorrichtung 1 möglich ist.

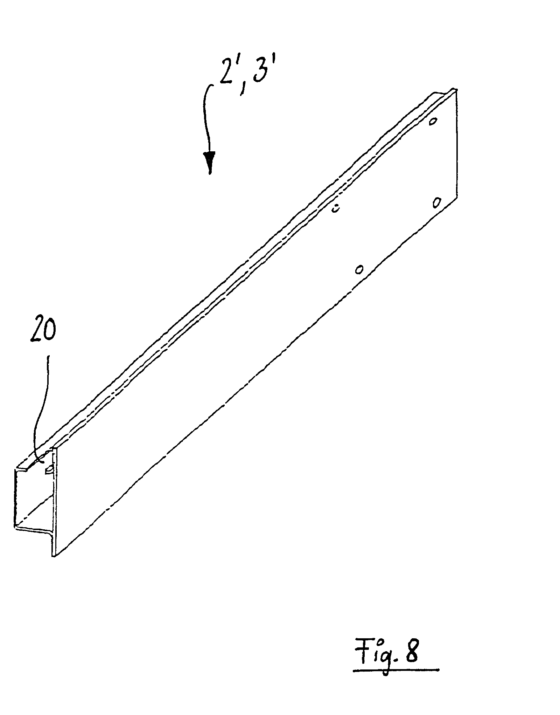

In den Ausführungsformen der Schubschienen 4, 5 gemäß Fig. 1 bis 3 sind diese jeweils als einstückige Strangprofilteile ausgebildet, wobei in der dargestellten Einbaulage die Längsnut 12 jeweils in einem oberen Profilflächenbereich 19 vorgesehen ist. Damit kann die Längsnut 12 in Verbindungsstellung (Fig. 3) der Schubschiene 4 mit dem Hohlprofil des Fahrgestellteils 2 so positioniert werden, daß die Längsnut 12 mit einem Längsschlitz 20 des Fahrgestellteils 2 bzw. 3 korrespondiert, dabei die beiden Bauteile nach Art einer Teleskopbaugruppe steckbar ineinandergreifen und die (parallel geschwenkten) Stützglieder 7, 7' mit in die Einschubstellung bewegbar sind (Fig. 3). In Fig. 8 ist das jeweilige Fahrgestellteile 2',3' bildende Hohlprofilteil in einer zweiten Ausführungsform dargestellt.

Das Transportgestell 6 ist in den dargestellten Ausführungsformen jeweils mit zwei einenends an der jeweiligen Schubschiene 4, 5 abgestützten Strebenteilen 21, 22 versehen und anderenends sind diese über eine im wesentlichen horizontale und quer zur Mittellängsebene 11 verlaufende Brückenstrebe 23 verbunden. Die Strebenteile 21, 22 sind dabei im Bereich der Schubschienen 4, 5 jeweils über einen ein Schwenkgelenk 24 bildenden Haltekörper 25 abgestützt, so daß über eine Schwenkbewegung (Pfeil 26, Fig. 1) entgegen der Fahrtrichtung das Transportgestell 6 aus der dargestellten vertikalen Gebrauchslage in eine im wesentlichen bodenparallele Ruhestellung parallel zu der jeweiligen Schubschiene 4, 5 verlagerbar ist. Zusätzlich zu dieser möglichen Schwenkverstellung können die Strebenteile 21, 22 zum Erreichen einer kompakten Ruhestellung auch aus zwei im mittleren Bereich 26 klappbaren und/oder teleskopierbaren Teilen 27, 28 (Bewegungspfeil T) gebildet sein (Fig. 7), so daß damit das Transportgestell 6 bei Nichtgebrauch in die mit Strichlinien dargestellte Ruhestellung verbracht werden kann. Die Strebenteile 21, 22 werden in Schubrichtung (Pfeil T) zusammengesteckt und in Schwenkrichtung (Pfeil A) so abgesenkt, daß die Tragvorrichtung 1 insgesamt nach einer Schubbewegung (Pfeil 29 in Fig. 7) im stirnseitigen Endbereich der beiden Fahrgestellteile 2, 3 in einer raumsparenden Packstellung anliegt.

Die Brückenstrebe 23 weist in zweckmäßiger Ausführung eine über einen Flanschteil 32 einen Haltestab 33 abstützende Profilierung 34 auf, so daß der Haltestab 33 zur Aufnahme unterschiedlicher Transportgüter quer zur Mittellängsebene 11 horizontal bewegbar (Pfeil B) ist und zur Brückenstrebe 31 hin schwenkbar (Pfeil B') ist.

In zweckmäßiger Ausführung nehmen die Stützglieder 7 nach der Schwenkbewegung (Pfeil S) in der gegenüberliegenden Gebrauchsstellung das beispielsweise als Fahrradquerträger (Fig. 2) oder eine Motorradwanne (Fig. 1) vorgesehene Stützglied 8 auf.

In der Ausführungsform der Tragvorrichtung 1 gemäß Fig. 7 sind die jeweiligen Schubschienen 4', 5' mit einer jeweils parallel zu diesen angeordneten und (ähnlich dem Profilansatzteil 18 gemäß Fig. 5) in das Hohlprofilteil 2, 3 des Fahrgestells einführbaren Zusatzschiene 35 versehen. An dieser Zusatzschiene 35 sind dabei die Stützglieder 7, 7' gehalten und das Transportgestell 6 ist an dem jeweils inneren Vierkantrohrteil 17 über den als eine Schubhülse 36 ausgebildete Haltekörper 25 festgelegt.

Zur Begrenzung des Verschiebeweges der Schubschienen 4, 5 kann einenends an diesen ein Anschlagteil (nicht dargestellt) vorgesehen sein, daß gegen ein Anlageteil 36 im Bereich der Fahrgestellteile 2, 3 (Fig. 2) beweglich ist und an ihrem freien Ende sind die Schubschienen 4, 5 mit jeweiligen Flanschplatten 37, 38 versehen, an denen ein weitere Anbauteile (nicht dargestellt) tragendes Stoß-stangenblech 39 angeordnet ist.

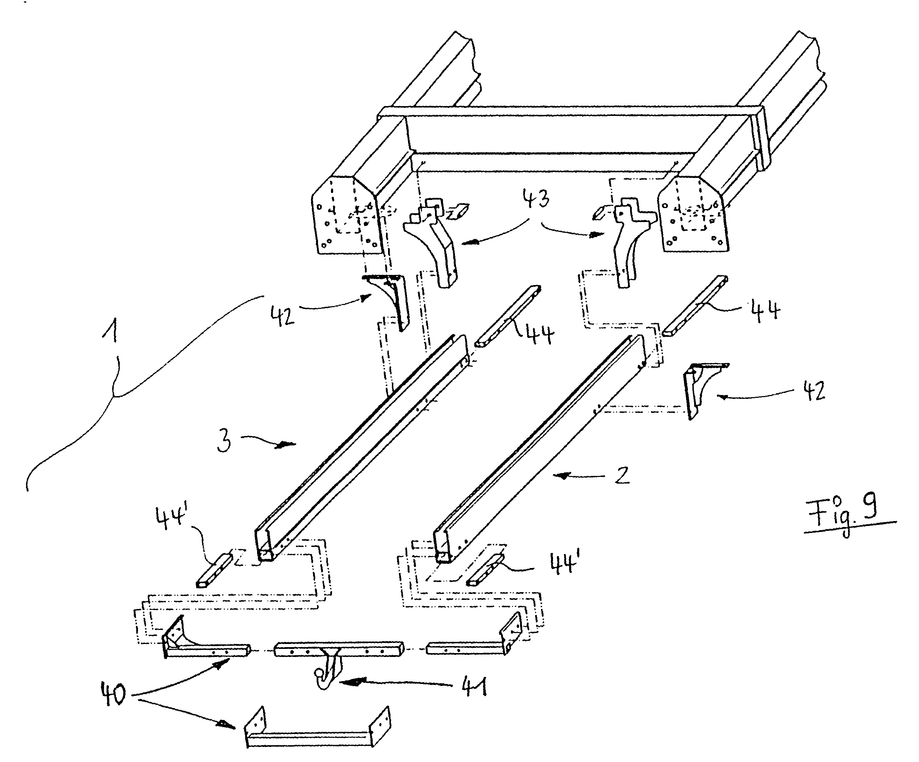

In Fig. 9 ist die Tragvorrichtung 1 mit einer Anhängekupplung 41 dargestellt, die über einen von mehreren Einzelbauteilen gebildeten Querträger 40 zwischen den Fahrgestellteilen 2, 3 so festlegbar ist, daß die nicht dargestellten Schubschienen in ihre Gebrauchsstellung (ähnlich Fig. 7) verbringbar sind. Mit den Bauteilen des Querträgers 40 ist eine zusätzliche Stabilisierung der Tragvorrichtung 1 erreicht, wobei diese zur Abstützung der Fahrgestellteile 2, 3 am Fahrzeugrahmen in zweckmäßiger Ausführung jeweilige, beispielsweise an unterschiedliche Fahrzeugtypen, wie Reisemobile und Kastenwagen oder dgl. anpaßbare Adapter 42, 43 aufweist und in deren Verbindungsbereich zusätzliche Stützstreben 44 in die Fahrgestellteile 2, 3 eingeschoben sind. Anderenends sind Stützstreben 44' vorgesehen, mit denen die Bauteile der Anhängekupplung 41 stabil aufgenommen sind.

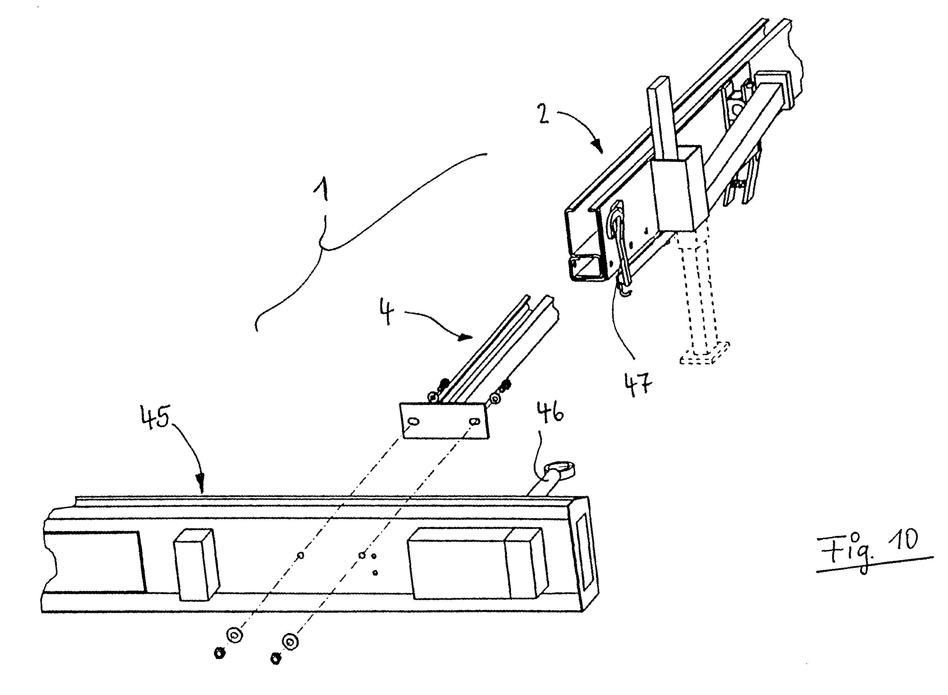

In Fig. 10 verdeutlicht eine perspektivische Ausschnittsdarstellung den Verbindungsbereich einer Stoßstange 45 im Bereich der Tragvorrichtung 1 bzw. an der Schubschiene 4, wobei zur Lagefixierung der Stoßstange 45 ein in ein Gegenglied 46 eingreifendes Hakenteil 47 am Fahrgestell 2 vorgesehen ist.

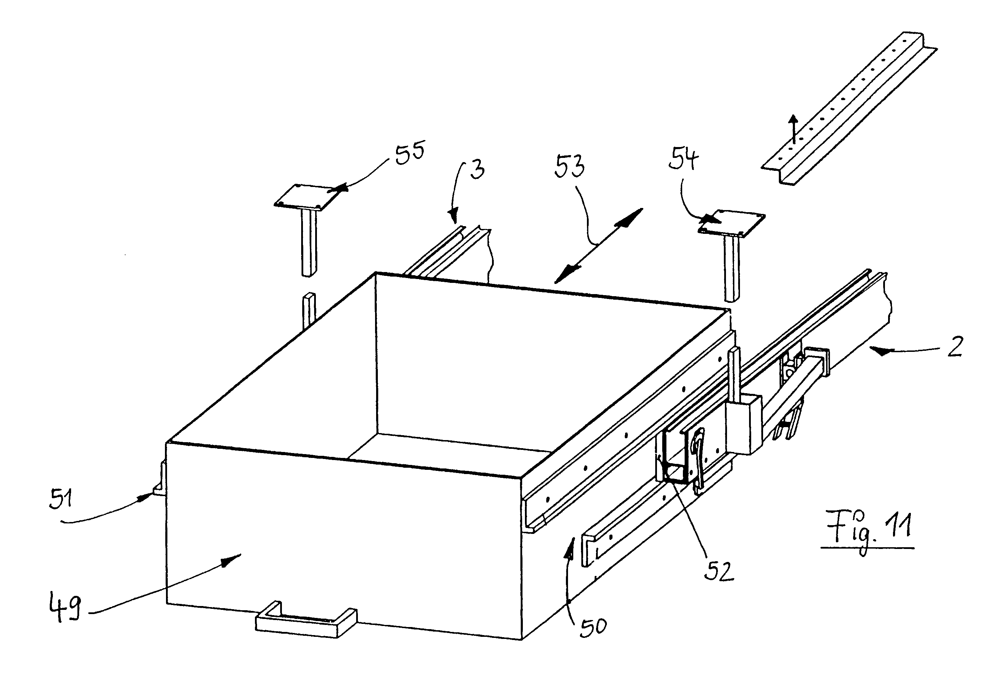

In Fig. 11 ist eine weitere Ausführungsform der Tagvorrichtung 1 dargestellt, wobei zwischen deren Fahrgestellteilen 2, 3 als das Anbauteil eine Schublade 49 vorgesehen ist. Die Schublade 49 weist seitliche Führungsstreben 50, 51 auf, die an den Fahrgestellteilen 2, 3 über eine Stützplatte 52 die horizontale Bewegung (Pfeil 53) ermöglichen. Zur Aufnahme hoher Gewichtskräfte sind die Fahrgestellteile 2, 3 über Haltestempel 54, 55 am Fahrzeugboden festgelegt.

In Fig. 12 ist die Schublade 49' in einer Explosivdarstellung mit der Tragvorrichtung 1 und den am Fahrgestell befindlichen Teilen 2, 3 dargestellt (ähnlich Fig. 2). Das Fahrgestell weist dabei eine bezüglich einer Querachse A', beispielsweise der hinteren Radachse, überstehende Länge L auf, so daß eine der Oberkonstruktion, beispielsweise einem Wohnwagen, entsprechende Gewichtslast (Pfeil F) wirksam ist. Bereits mit der in Einschubstellung und ein in sich steifes Bauteil bildenden Schublade 49 ist in diesem Bereich des Fahrzeugrahmens eine vorteilhafte Aussteifung erreicht, wobei in zweckmäßiger Ausführung auch zusätzliche Streben 56, 57 (Fig. 12) vorgesehen sein können, mit denen die vorbeschriebene Aussteifungswirkung noch verbessert ist.

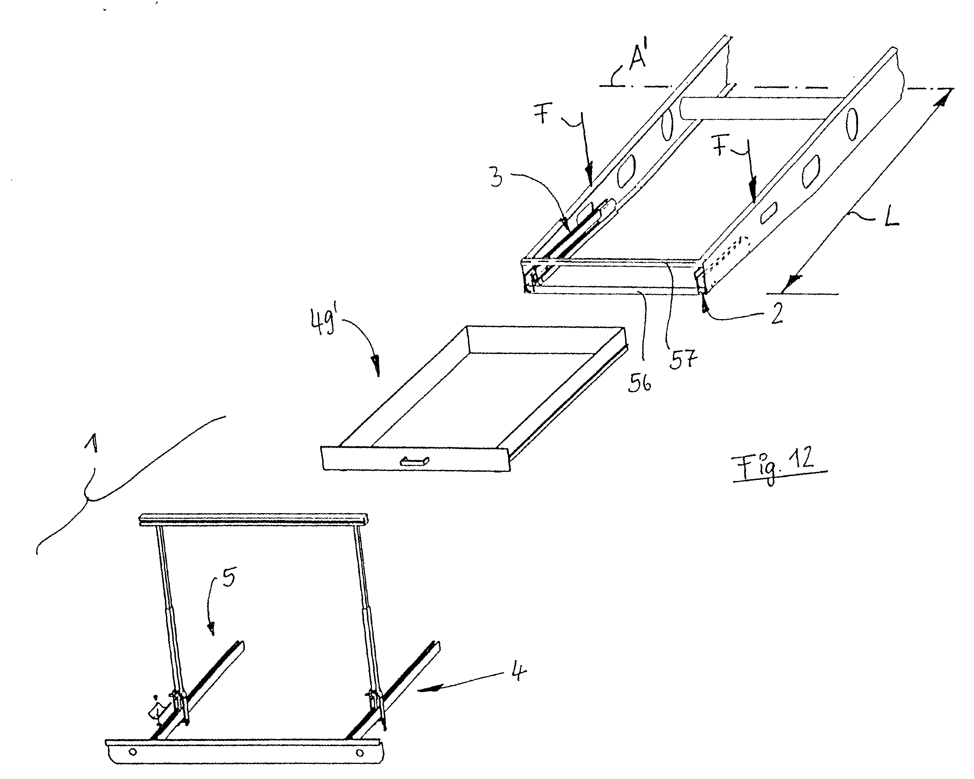

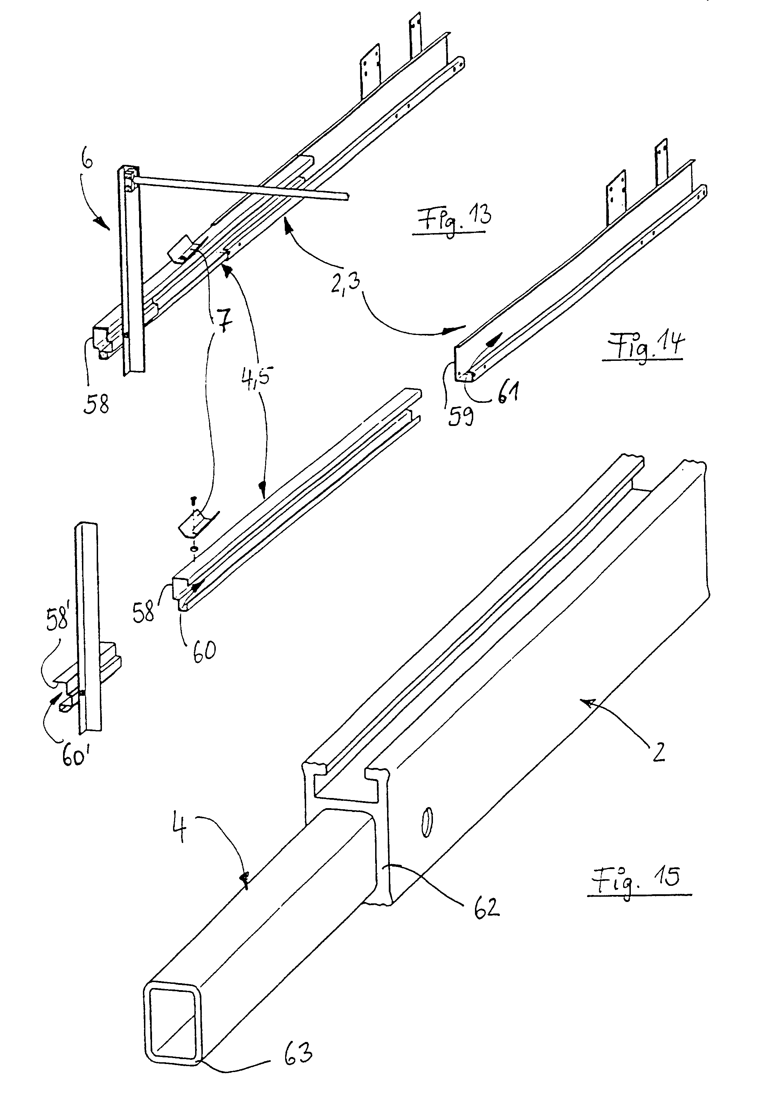

In Fig. 13 und 14 sind die Fahrgestell- und Schubschienenteile 2, 3, 4, 5 in ihrer Verbindungsstellung ähnlich Fig. 3 verdeutlicht, wobei die Bauteile unterschiedliche Querschnittsprofile in Form von Abkantprofilen 58, 59 mit jeweiligem Längsschlitz 60, 61 darbieten, an denen die Anbauteile 6, 7 festlegbar sind.

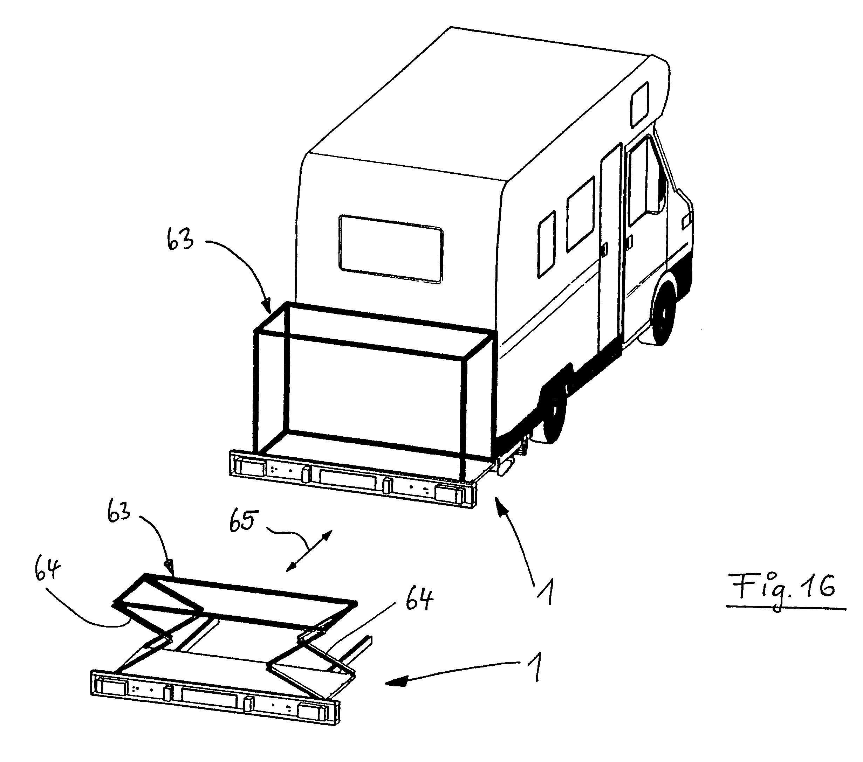

In der Ausführung gemäß Fig. 15 sind die Schubschienen 4 und das zugeordnete Fahrgestellteil 2 jeweils als nach Art einer Rohr-in-Rohr-Baugruppe ineinanderpassende Rohrprofilteile 62, 63 ausgebildet, so daß diese in der Herstellung als Strangprofilteile kostengünstigen Bauteile in einem besonders stabilen Verbindungseingriff festlegbar sind.

In Fig. 16 ist in einer weiteren Ausführungsform ein Wohnmobil mit der in Einzeldarstellung und in einer Anbaulage verdeutlichten Tragvorrichtung 1 gezeigt, wobei auf dieser eine das Anbauteil bildende Faltbox 63 abgestützt ist, deren Vertikalstreben 64 aus einer flachen Ruhestellung in die Gebrauchsstellung ausgeklappt werden können, so daß die Faltbox 63 danach gemeinsam mit der Tragvorrichtung 1 in den Bereich des Fahrgestellrahmens einschiebbar ist (Pfeil 65).

## Patentansprüche

1. Tragvorrichtung für einen heckseitigen Anbau an Kraftfahrzeugen, insbesondere Wohnmobilen, Wohnwagen o. dgl., die mit zwei einerseits ein vom Fahrzeugheck vorstehendes Transportgestell (6) tragenden und andererseits am Fahrgestell (2, 3) abgestützten Verbindungsgliedern versehen ist, **dadurch gekennzeichnet,** daß die Verbindungsglieder jeweils von einer eine Führungs- und Halteprofilierung (10) aufweisenden Schubschiene (4, 5; 4', 5') gebildet und an dieser als schwenk-, klapp- und/oder steckbare Anbauteile sowohl das Transportgestell (6) als auch zusätzliche Transportgut-Stützglieder (7, 7', 8) festlegbar sind.

2. Tragvorrichtung nach Anspruch 1, dadurch gekennzeichnet, daß die Schubschiene (4, 5; 4', 5')und die Anbauteile (6, 7, 7', 8) jeweils über einen lösbaren Verbindungseingriff in der dem Heckbereich des Fahrzeugs vorgelagerten Gebrauchsstellung festgelegt und aus dieser in eine kompakte Packstellung nahe dem Fahrgestell (2, 3) verbringbar sind.

3. Tragvorrichtung nach Anspruch 1 oder 2, dadurch gekennzeichnet, daß zumindest die Anbauteile (6, 7, 7') über jeweilige Gelenkbereiche mit der Schubschiene (4, 5; 4', 5') verbunden sind.

4. Tragvorrichtung nach einem der Ansprüche 1 bis 3, dadurch gekennzeichnet, daß diese mit nur einer Schubschiene versehen ist.

5. Tragvorrichtung nach einem der Ansprüche 1 bis 4, dadurch gekennzeichnet, daß die Schubschiene (4, 5) mit zumindest einer die Halteprofilierung bildenden Längsnut (12) versehen ist und über diese das Transportgestell (6) sowie die Stützglieder (7, 7', 8) in jeweils an unterschiedliche Transportgüter anpaßbaren Gebrauchsstellungen festlegbar sind.

6. Tragvorrichtung nach Anspruch 5, dadurch gekennzeichnet, daß in der Längsnut (12) ein mit einem Schraubverbindungsteil (14) versehener Klemmkörper (13) derart abgestützt ist, daß das Transportgestell (6) und/oder das Stützglied (7, 7', 8) längsbeweglich festlegbar sind.

7. Tragvorrichtung nach einem der Ansprüche 1 bis 6, dadurch gekennzeichnet, daß die Schubschiene (4, 5) mit einem im wesentlichen rechteckigen Querschnitt als die Führungsprofilierung versehen und die Schubschiene (4, 5) zumindest bereichsweise in ein rechteckiges Hohlprofilteil im Bereich des Fahrgestells (2, 3; 2', 3') einführbar ist.

8. Tragvorrichtung nach einem der Ansprüche 1 bis 7, dadurch gekennzeichnet, daß die Schubschiene (4, 5) in Einbaulage in einem oberen Profilflächenbereich (19) die Längsnut (12) darbietet und zu dieser korrespondierend das Hohlprofilteil (2, 3) zumindest bereichsweise mit einem Längsschlitz (20) versehen ist.

9. Tragvorrichtung nach einem der Ansprüche 1 bis 8, dadurch gekennzeichnet, daß das Transportgestell (6) mit zwei einenends an der jeweiligen Schubschiene (4, 5) abgestützten Strebenteilen (21, 22) versehen ist und diese anderenends über eine im wesentlichen horizontal verlaufende Brückenstrebe (23) verbunden sind.

10. Tragvorrichtung nach Anspruch 9, dadurch gekennzeichnet, daß die Strebenteile (21, 22) jeweils über ein Schwenkgelenk (24) mit der Schubschiene (4, 5) verbunden sind.

11. Tragvorrichtung nach Anspruch 9 oder 10, dadurch gekennzeichnet, daß die Strebenteile (21, 22) jeweils aus zumindest zwei klapp- und/oder teleskopierbaren Teilen (27, 28) gebildet sind.

12. Tragvorrichtung nach einem der Ansprüche 9 bis 11, dadurch gekennzeichnet, daß die Brückenstrebe (23) mit einer über einen Flanschteil (32) einen Haltestab (33) abstützenden Nutprofilierung (34) versehen ist.

13. Tragvorrichtung nach einem der Ansprüche 1 bis 12, dadurch gekennzeichnet, daß die auf den jeweiligen Schubschienen (4, 5) befindlichen Stützglieder (7, 7') in eine Gegenüberstellung verbringbar und über einen Querträger (8) verbindbar sind.

14. Tragvorrichtung nach einem der Ansprüche 1 bis 13, dadurch gekennzeichnet, daß zumindest eine der Schubschienen (4, 5) mit einer parallel zu dieser angeordneten und in das Hohlprofilteil des Fahrgestells (2, 3) einführbaren Zusatzschubschiene (35) versehen ist.

15. Tragvorrichtung nach einem der Ansprüche 1 bis 14, dadurch gekennzeichnet, daß der Verschiebeweg der Schubschienen (4, 5) über ein einen Anschlag bildendes Bauteil (36) begrenzt ist.

16. Tragvorrichtung nach einem der Ansprüche 1 bis 15, dadurch gekennzeichnet, daß zwischen den beiden Fahrgestellteilen (2, 3; 2' ,3') eine über einen Querträger (40) abgestützte Anhängekupplung (41) und/oder eine Stoßstange (45) vorgesehen ist.

17. Tragvorrichtung nach einem der Ansprüche 1 bis 16, dadurch gekennzeichnet, daß zwischen den Schubschienen (4, 5) als Anbauteil eine Schublade (49) vorgesehen ist, die in Einschubstellung eine Queraussteifung der Fahrgestellteile (2, 3) bildet.

18. Tragvorrichtung nach einem der Ansprüche 1 bis 17, dadurch gekennzeichnet, daß die Schubschienen (4, 5) und die Fahrgestellteile (2, 3) jeweils als nach Art einer Rohr-in-Rohr-Baugruppe ineinanderpassende Strangprofilteile ausgebildet sind.

19. Tragvorrichtung nach einem der Ansprüche 1 bis 18, dadurch gekennzeichnet, daß die Bauteile der Tragvorrichtung (1) aus Leichtmetall, insbesondere Aluminium, bestehen.

## Claims

1. A support device for a rear-end assembly on motor vehicles, particularly mobile homes, mobile caravans or the like, which is provided with two connecting members supported on the one hand on the chassis (2, 3) and supporting a transporting frame (6) projecting from the rear of the vehicle, characterised in that the connecting members are in each case constituted by a push rail (4, 5; 4', 5') which has a guide and retaining profiling (10) and, adapted to be fitted thereon as pivotable, hinged and/or push-in attachment parts, both the transport frame (6) and also additional transport material supporting members (7, 7', 8) can be fixed.

2. A support device according to claim 1, characterised in that the push rail (4, 5; 4', 5') and the attachment parts (6, 7, 7', 8) are in each case fixed via a separable connecting engagement in the position of use which is in front of the rear part of the vehicle and can be moved out of this into a compact packed-away position close to the chassis (2, 3).

3. A support device according to claim 1 or 2, characterised in that at least the attachment parts (6, 7, 7') are connected to the push rail (4, 5, 4', 5') by respective articulating portions.

4. A support device according to one of claims 1 to 3, characterised in that it is provided with only one push rail.

5. A support device according to one of claims 1 to 4, characterised in that the push rail (4, 5) is provided with at least one longitudinal groove (12) which forms the retaining profiling and in that, via this, the transport frame (6) and also the supporting members (7, 7', 8) can be fixed in positions of use which are respectively adaptable to various transported materials.

6. A support device according to claim 5, characterised in that there is in the longitudinal groove (12) a clamping member (13) which is provided with a screwed connecting part (14) in such a way that the transport frame (6) and/or the supporting member (7, 7', 8) are adapted for longitudinal movement into a locked position.

7. A support device according to one of claims 1 to 6, characterised in that the push rail (4, 5) is provided with a substantially rectangular cross-section as the guide profiling while the push rail (4, 5) has at least portions which can be introduced into a rectangular hollow profiled part in the region of the chassis (2, 3; 2', 3').

8. A support device according to one of claims 1 to 7, characterised in that the push rail (4, 5), in the installed position, offers in an upper profiled surface portion (19) the longitudinal groove (12) and in that, corresponding to this, the hollow profiled part (2, 3) has at least portions which are provided with a longitudinal slot (20).

9. A support device according to one of claims 1 to 8, characterised in that the transport frame (6) is provided with two strut parts (21, 22) braced at one end on the respective push rail (4, 5) while at the other end they are connected via a substantially horizontally extending bridging strut (23).

10. A transport device according to claim 9, characterised in that the strut parts (21, 22) are respectively connected to the push rail (4, 5) via a pivoting joint (24).

11. A support device according to claim 9 or 10, characterised in that the strut parts (21, 22) are respectively constituted by at least two parts (27, 28) which can be hinged-over and/or telescoped.

12. A support device according to one of claims 9 to 11, characterised in that the bridging strut (23) is provided with a groove profiling (34) bracing a retaining bar (33) via a flange part (32).

13. A support device according to one of claims 1 to 12, characterised in that the support members (7, 7') disposed on the respective push rail (4, 5) can be moved into an opposing position and can be connected via a transverse member (8).

14. A support device according to one of claims 1 to 13, characterised in that the at least one of the push rails (4, 5) is provided with an auxiliary push rail (35) adapted for insertion into the hollow profiled part of the chassis (2, 3) and which is disposed parallel with the push rails (4, 5).

15. A support device according to one of claims 1 to 14, characterised in that the path of displacement of the push rails (4, 5) is limited by a component (36) which constitutes an abutment.

16. A support device according to one of claims 1 to 15, characterised in that between the two chassis parts (2, 3; 2', 3') there is an impact bar (45) and/or a trailer coupling (41) braced via a cross-member (40).

17. A support device according to one of claims 1 to 16, characterised in that between the push rails (4, 5) there is provided as an attachment part a drawer (49) which, in the pushed-in position, forms a transverse reinforcement of the chassis parts (2, 3).

18. A support device according to one of claims 1 to 17, characterised in that the push rails (4, 5) and the chassis parts (2, 3) are in each case constructed in the manner of extruded profiled parts which fit into one another as a tube-in-tube assembly.

19. A support device according to one of claims 1 to 18, characterised in that the components of the support device (1) consist of light metal, particularly aluminium.

## Revendications

1. Dispositif de support pouvant être installé à l'arrière d'un véhicule, notamment d'un camping-car, véhicules d'habitation ou autres, comportant deux organes de liaison qui d'une part portent un bâti de transport (6) dépassant de l'arrière du véhicule et d'autre part s'appuient sur le châssis du véhicule (2, 3),
caractérisé en ce que
les organes de liaison sont formés chaque fois par un rail coulissant (4, 5 ; 4', 5') ayant un profil de guidage et de fixation (10), et comme accessoires basculants, rabattables et/ou enfichables, aussi bien le bâti de transport (6) que d'autres organes de support pour les produits à transporter (7, 7', 8) peuvent se fixer sur ces rails.

2. Dispositif de support selon la revendication 1,
caractérisé en ce que
les rails coulissants (4, 5 ; 4', 5') et les accessoires (6, 7, 7', 8) sont fixés en position d'utilisation dépassant de la zone arrière du véhicule par une liaison amovible, et peuvent être transformés de cette position en une position regroupée compacte à proximité du châssis (2, 3) du véhicule.

3. Dispositif de support selon l'une quelconque des revendications 1 ou 2,
caractérisé en ce qu'
au moins les accessoires (6, 7, 7') sont reliés aux rails coulissants (4, 5 ; 4', 5') par des zones d'articulation respectives.

4. Dispositif de support selon l'une quelconque des revendications 1 à 3,
caractérisé en ce qu'
il est muni d'un unique rail coulissant.

5. Dispositif de support selon l'une quelconque des revendications 1 à 4,
caractérisé en ce que
les rails coulissants (4, 5) sont munis d'au moins une rainure longitudinale (12) formant les profil de fixation, et permettent de fixer par cette rainure, le bâti de transport (6) ainsi que les organes de support (7, 7', 8) dans des positions d'utilisation respectives, adaptées à différents produits à transporter.

6. Dispositif de support selon la revendication 5,
caractérisé en ce qu'
un organe de serrage (13) muni d'une pièce de liaison à vis (14) est appuyé dans la rainure longitudinale (12) pour pouvoir bloquer le bâti de transport (6) et/ou les organes d'appui (7, 7', 8) mobiles dans la direction longitudinale.

7. Dispositif de support selon l'une quelconque des revendications 1 à 6,
caractérisé en ce que
le rail coulissant (4, 5) présente une section essentiellement rectangulaire comme profilé de guidage et le rail coulissant (4, 5) s'introduit au moins par zones dans une partie de profilé creux rectangulaire au niveau du châssis du véhicule (2, 3 ; 2', 3').

8. Dispositif de support selon l'une quelconque des revendications 1 à 7,
caractérisé en ce que
les rails coulissants (4, 5) offrent en position de montage, la rainure longitudinale (12) dans une zone supérieure (19) du profil et en correspondance à celle-ci, les parties de profil creux (2, 3) comportent au moins par zones une fente longitudinale (20).

9. Dispositif de support selon l'une quelconque des revendications 1 à 8,
caractérisé en ce que
le bâti de transport (6) est muni de deux branches (21, 22) appuyées par une extrémité sur l'un des rails coulissants (4, 5) respectifs et leur autre extrémité est reliée par une traverse (23) essentiellement horizontale.

10. Dispositif de support selon la revendication 9,
caractérisé en ce que
les branches (21, 22) sont reliées aux rails coulissants (4, 5) par une articulation de basculement (24) respective.

11. Dispositif de support selon l'une quelconque des revendications 9 ou 10,
caractérisé en ce que
les branches (21, 22) sont formées chacune d'au moins deux parties (27, 28) basculantes et/ou télescopiques.

12. Dispositif de support selon l'une quelconque des revendications 9 à 11,
caractérisé en ce que
la traverse (23) est munie d'un profil à rainure (34) supportant une tige de fixation (33) par l'intermédiaire d'une pièce en forme de bride (32).

13. Dispositif de support selon l'une quelconque des revendications 1 à 12,
caractérisé en ce que
les organes d'appui (7, 7') qui se trouvent sur les rails coulissants (4, 5) respectifs peuvent être mis dans une position en vis-à-vis et être reliés par une traverse (8).

14. Dispositif de support selon l'une quelconque des revendications 1 à 13,
caractérisé en ce qu'
au moins l'un des rails coulissants (4, 5) est muni d'un rail supplémentaire (35) parallèle à celui-ci et qui peut s'engager dans la partie de profilé creux du châssis (2, 3) du véhicule.

15. Dispositif de support selon l'une quelconque des revendications 1 à 14,
caractérisé en ce que
la course de coulissement des rails (4, 5) est limitée par une pièce (36) formant une butée.

16. Dispositif de support selon l'une quelconque des revendications 1 à 15,
caractérisé par
un attelage de remorque (41) appuyé sur une poutre transversale (40) et/ou un pare-chocs (45), entre les deux parties de châssis (2, 3 ;2', 3')

17. Dispositif de support selon l'une quelconque des revendications 1 à 16,
caractérisé par
un tiroir (49) prévu comme composant entre les rails coulissants (4, 5), ce tiroir formant un moyen de rigidification transversal des parties de châssis (2, 3) du véhicule lorsque le tiroir est en position rentrée.

18. Dispositif de support selon l'une quelconque des revendications 1 à 17,
caractérisé en ce que
les rails (4, 5) du tiroir et les parties de châssis (2, 3) du véhicule sont réalisés à la manière d'un ensemble tubes dans tubes de profilés extrudés adaptés l'un dans l'autre;

19. Dispositif de support selon l'une quelconque des revendications 1 à 19,
caractérisé en ce que
les composants du dispositif de support (1) sont en métal léger, notamment en aluminium.
